(19) Europäisches Patentamt
European Patent Office
Office européen des brevets

(11)  **EP 2 642 115 B1**

(12)  **EUROPÄISCHE PATENTSCHRIFT**

(45) Veröffentlichungstag und Bekanntmachung des Hinweises auf die Patenterteilung:
**14.11.2018   Patentblatt 2018/46**

(51) Int Cl.:
**F03B 11/02** *(2006.01)*          **F03B 3/18** *(2006.01)*
**F03B 15/06** *(2006.01)*

(21) Anmeldenummer: **12468004.2**

(22) Anmeldetag: **22.05.2012**

(54) **Verbesserung des Mechanismus zum Regulieren des Wasserstroms durch eine Turbine des Banki-Systems**

Improvement of the mechanism for regulating the flow of water through a turbine of the Banki system

Amélioration du mécanisme de régulation du courant d'eau à travers une turbine du système Banki

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.03.2012   SI 201200090**

(43) Veröffentlichungstag der Anmeldung:
**25.09.2013   Patentblatt 2013/39**

(73) Patentinhaber: **Siapro Hydro Power GesmbH 1230 Vienna (AT)**

(72) Erfinder: **Gorjanc, Janez 4000 Kranj (SI)**

(74) Vertreter: **Pipan, Marjan Kotnikova 5 1000 Ljubljana (SI)**

(56) Entgegenhaltungen:
**JP-A- H01 257 770     JP-U- H02 122 177
JP-U- S57 157 768**

## Beschreibung

### GEGENSTAND DER ERFINDUNG

Der Gegenstand der Erfindung ist eine Besserung des Mechanismus des Wasserstroms durch eine Turbine des Banki-Systems gemäß dem slowenischen Patent SI 22684.

### TECHNISCHES PROBLEM

Das durch die Erfindung beschriebene technische Problem ist ein verbessertes Regulieren des Wasserstroms durch eine Wasserturbine des Banki-Systems mit einem Diffusor-Saugrohr bzw. einem Diffusor. Durch den Einsatz des erfindungsgemäßen Diffusors kann der Unterdruck-Fallhöhe unter dem Turbinenläufer in Falle eines größeren Wasserstroms hinsichtlich der existierenden derartigen Technik optimal ausgenutzt werden.

Turbinen des Banki-Systems sind für kleinere durch große Schwankungen in der Durchflussmenge charakteristische Fließgewässer geeignet. Der Grund für den schwankenden Wasserstrom in Fließgewässern liegt in Schneeschmelzen im Frühling und in verschiedenen Mengen von Regen während des Jahres sowie im Wechseln von Dürre- und Regenperioden. Um einen ökologisch akzeptablen Durchstrom zu sichern, das Leben in Fließgewässern zu schützen sowie eine optimale Durchstromausnutzung zu erzielen, muss die durch die Turbinen fließende Wassermenge in einem relativ großen Maß geändert werden. Bei der Umwandlung der Wasserenergie aus den Fließgewässern mit großen Stromschwankungen hat sich ein Bedarf nach solchen Turbinen erwiesen, die einen sehr großen Umfang in der Menge des Wasserstroms ausnutzen können und dabei verständlich auch ein höchstens großes Ausnutzen der verfügbaren Wasserenergie erreichen. Eine Turbine, die einen großen Umfang des Wasserstroms ausnutzen kann, kann zwei Turbinen mit einem kleineren Nutzumfang der Wasserstrommenge ersetzen und damit einen erheblichen Investierungsvorteil gewinnen.

### STAND DER TECHNIK

Das Patent SI 22684 (Gorjanc, Aljancic) stellt ein geändertes Absperrorgan des Wasserstroms auf den Läufer einer Banki-Turbine dar. Das Wesen dieses Mechanismus liegt darin, dass es die Menge des Wasserstroms in das Läufergebiet so ändert, dass es das Wasser nur auf eine gewisse Breite des Läufers in Richtung senkrecht auf dir Läuferachse zuführt. Dieses System der Wassersperre bewahrt eine mit der Konstruktion definierte und mehr ausgeglichene Geometrie des anfallenden Wasserstrahls in den Läufer und damit Energieausnutzung im ganzen verbreiteten Umfang des Wasserstroms bis zu einem Verhältnis von 1:9 verbessert.

In den Patentdokumenten JP H01 257770A, JP H02 12217795 und JP S57 157768 wird für die Ausführungen der Banki-Turbine (»Ossberger«-System) der Einsatz von mehreren Trennwänden in das parallele Saugrohr vorgeschlagen, um eine befriedigende Durchflussgeschwindigkeit bei reduziertem Durchfluss in einem bestimmten Kammer-Kanal zu erzielen; für einen vollen Saugeffekt muss die Durchflussgeschwindigkeit auch bei einem minimal ausgenutzten Durchfluss mindestens gleich oder größer als 0,5 m/s sein. Die vorwiegend im Patentdokument JP H01 257770A beschriebene Ausführung, die gewährleistet, dass der Wasserstand immer im Höchststand bleibt, ungeachtet von Änderungen der Wassermenge, mit Trennwänden, die im Ausflussteil vier Kammern bilden, ist unfunktional und kompliziert und hat sich, sofern ich weiß, in der Praxis nicht durchgesetzt.

### LÖSUNG DES TECHNISCHEN PROBLEMS

Außer einer optimalen Ausnutzung des verfügbaren Stromwassers in der Turbine ist auch die volle Ausnutzung der Fallhöhe, die sich hinsichtlich der Wetterbedingungen und der Natur des Laufgewässers ändert, wichtig. Aus diesem Grund wird zu modernen Banki-Turbinen am Wasserausfluss aus der Turbine ein Saugrohr, vorzugsweise ein Diffusor-Saugrohr zugefügt, um die Fallhöhe im Ganzen auszunutzen.

Das Saugrohr nutzt auch die Fallhöhe unter dem Turbinenläufer aus. Damit kann man mit Sicherheit den Betrieb der Turbine auch über die Höhe des schwankenden Unterwassers aufheben. Das Diffusor-Saugrohr nutzt neben der Unterdruckwasserhöhe unter dem Läufer mit einer Reduzierung der Ausgangsgeschwindigkeit auch die verbleibende kinetische Energie des Austrittswassers aus.

Die Höhe der Saugwasserhöhe unter dem Läufer ist der Höhe der Druckwasserhöhe oberhalb des Läufers gleich. Gewissermaßen ist der Saugwasserhöhe unter dem Läufer wegen der Erzeugung eines atmosphärischen Unterdruckregims im Gehäuse des rotierenden Läufers bevorzugt. Das Diffusor-Saugrohr kann praktisch bis zu einer Höhe von 3,5 m eingesetzt werden. Anwendung einer höheren Rohrhöhe, die die Kavitationsgefahr am Läufer verursachen könnte, muss nur vom Hersteller der Turbine bezüglich der Installationsgegebenheiten festgelegt werden.

Die bekannte Ausführungstechnik einer CINK-Banki-Turbine benutzt ein Diffusor-Saugrohr mit einer Ausgangsgeschwindigkeit des Wassers von 0,9 m/ s bis zu l m/s. Neben der Saughöhe nutzt sie gut auch die verbleibende kinetische Energie des Ausgangswassers, aber im Fall einer niedrigen Fallhöhe unter 30 % des vollen Stroms, kann sie die optimale Höhe der Unterdruck-Wassersäule wegen des zu langsamen Ausgangswassers aus dem Diffusor-Saugrohr (Ausgangsgeschwindigkeit < 0,3 m/s) nicht mehr instandhalten. Das CINK-System hat eine anwendbare Energieausnutzung des Wassers bis zum Verhältnis 1:4, beziehungsweise bis zum 25 % des vollen Wasserstroms.

Ein erweiterter Umfang der Energieausnutzung des Stromwassers in der Turbine mit einem Turbinenabsperrorgan P. SI 22684 zeigt auf ein Bedürfnis, dass auch das Diffusor-Saugrohr der Turbine so angepasst wird, dass es die optimale Unterdruck-Wassersäule instandhalten kann auch bei dem möglichst breitesten Umfang der Energieausnutzung des Stromwassers, und zwar bis zu 1/9 des vollen Wasserstroms.

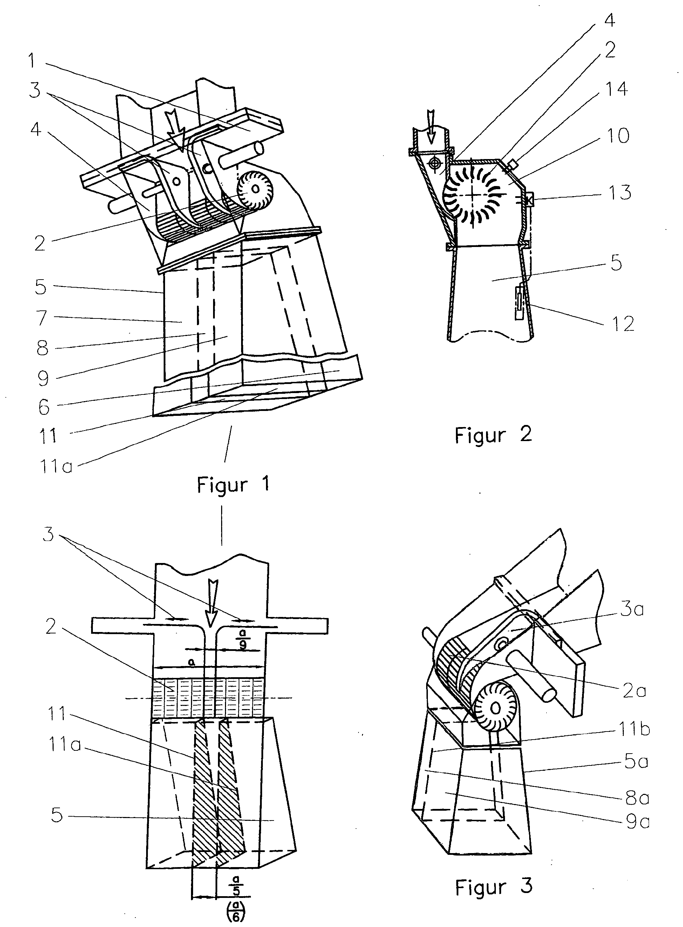

Das auf eine quer-senkrechte Weise auf die Läuferachse einwirkende Turbinenabsperrorgan ermöglicht, dass das Diffusor-Saugrohr in drei Kammern mit zwei Trennwänden aufgeteilt wird (Figur 1). In der Mittelkammer des Diffusor-Saugrohrs wird in dieser Weise trotz einer Wasserabsperrung (Verminderung des Durchstroms) eine ausreichende Durchlaufgeschwindigkeit des Wassers bewahrt, die im größeren oder kleineren Maß der Geschwindigkeit des vollen Wasserstroms durch das Diffusor-Saugrohr ähnlich ist. Es wird damit gesichert, dass im mittleren Teil des Diffusor-Saugrohrs auch bei der kleinsten Menge des Wasserstroms eine ausreichende Ausgangsgeschwindigkeit des Wassers bewahrt wird, die ein optimales Instandhalten der Unterdruck-Wassersäule im ganzen Diffusor-Saugrohr (in allen drei Kammern) ermöglicht.

Die definierte Mittelkammer des Diffusor-Saugrohrs kann die "Grenzkammer" genannt werden. Die Trennwände der Grenzkammer im Diffusor liegen ein wenig unterhalb des Läufers, so dass sich der entstandene Unterdruck in allen drei Kammern des Diffusors ausgleicht und damit gleicht sich auch die Höhe der Wassersäule aus. Eine ausreichende Durchgangs- und Ausganggeschwindigkeit des Wassers im Diffusor bis zum Umfang des Stromwassers 1/10 des vollen Stroms wird schon durch die Mittelkammer einer Breite von 1/5 der Querweite des Läufers ermöglicht (längs der Läuferachse gesehen). Beim Regulieren der Grenzkammer muss man nur davon Rechnung tragen, dass das Ausgangswasser aus dieser Kammer eine ausreichende Geschwindigkeit haben muss, die nicht unterhalb von 0,5 m/s liegt. Bei dieser Wassergeschwindigkeit können noch genug Luft und Wasserausdünstungen, die im Gehäuse des Läufers entstehen, abgetragen werden (atmosphärische Luft strömt in das Gehäuse des Läufers auch ein, wenn die Läuferachse nicht ganz abgedichtet ist).

Eine ausreichend ausgenutzte Wassergeschwindigkeit aus dem Diffusor beträgt beim vollen Strom 1 m/s, also beträgt bei 1/10 des vollen Stroms die Ausgangsgeschwindigkeit aus der Grenzkammer 1/10 x 5 = 0,5 m/s. Diese Geschwindigkeit des Ausgangswassers ist für den Unterdruckregim und für die Instandhaltung der Wassersäule im ganzen Diffusor sowie in seitlichen zwei Kammern, die keinen Wasserstrom haben, ausreichend.

Da sich der Wasserstrahl nach dem Durchgang durch den Läufer (längs der Läuferachse gesehen) ein wenig verbreitet, ist es empfehlenswert, dass die Grenzkammer unterhalb der engsten Absperrbreite des Turbinen-Absperrorgans auch ein wenig breiter ist, wenn sich das Absperrorgan im Zustand der kleinsten Wasserdurchlässigkeit befindet, die noch zur Energieausnutzung benutzt werden kann.

Wegen der Ausnutzung des Rests der kinetischen Energie des Wassers, dessen Geschwindigkeit unterhalb des Läufergehäuses normallerweise von 2 m/s bis 4 m/s beträgt, hat der Diffusor ein gewisses Verhältnis zwischen der Eingangs- und Ausgangsoberfläche, die von 0,25 bis 0,45 beträgt. Beim Konstruieren des Diffusor-Saugrohrs werden ungeachtet des Einbaus der den Diffusor in die "Grenzkammer" trennenden Trennwände in der Praxis bekannte Gesetzmäßigkeiten bei der Gestaltung und Ausführung der Rohrlänge berücksichtigt.

Die geeignete Ausgangsgeschwindigkeit des Wassers aus dem Diffusor-Saugrohrs beträgt von 0,9 m/s bis 1 m/s. Bei solcher Ausgangsgeschwindigkeit des Wassers kann der Verlust der hydraulischen Absenkung vernachlässigt werden:

$$h = \frac{v^2}{2g} = \frac{0{,}9^2\ m^2/s^2}{19{,}6\ m/s^2} = 0{,}041m$$

g = Erdbeschleunigung = 9,8 m/s$^2$
v = absolute Geschwindigkeit (des Wassers), m/s

In Hinsicht auf Installationsbedingungen der Turbine und auf anwendbaren Umfang des Wasserstroms ist es geraten, dass die Ausführung des Diffusor-Rohrs und die "Grenzkammer" mit einem Testmodel festgelegt werden.

Die Saugleistung im Diffusor ändert sich und kann wegen der Änderungen im Wasserstrom zu hoch werden. Um es zu vermeiden, dass die Höhe des Unterdruckwassers in den Läufer gelangt, wird ein Wasserfühler (Waterpilot E+H), der die richtige Wasserhöhe mit der Steuerung des Ventils zum Zufuhr der atmosphärischen Luft in den Raum am Läufer (Figur 2) in den Diffusor eingefügt. Der Wasserfühler kann in irgendwelche Diffusor-Kammer angebracht werden; eine richtige Position des Fühlers ist in der Mitte der Diffusor-Höhe. Bei kleineren Turbinen kann der Unterdruck bzw. die Höhe der Wassersäule im Diffusor auch mit einem mechanischen Federventil zum Luftzufuhr in den Raum am Läufer reguliert werden.

## DIFFUSOR MIT DER "GRENZKAMMER"

Die beschriebene Erfindung des Diffusors mit der "Grenzkammer" ermöglicht eine optimale Ausnutzung des Restes der potenzialen und kinetischen Energie des Ausgangswassers unterhalb des Läufers der Banki-Turbine mit dem Absperrorgan nach Patent SI 22684 in einem weiten Umfang der Energieausnutzung des Wasserstroms bis zu einem Verhältnis von 1:9.

Die Erfindung ermöglicht eine rational niedrige Ausgangsgeschwindigkeit des Wassers aus dem Diffusor-Saugrohr beim vollen Strom des Turbinenbetriebs und behält die nötige Stromgeschwindigkeit des Wassers in der "Grenzkammer" bis zum kleinsten anwendbaren Strom in der Turbine. Damit wird der nötige Unterdruckregim für eine optimale Instandhaltung der Wassersäule im Diffusor in dem möglichst breitesten Umfang des Wasserstroms gewährleistet.

Die vorliegende Erfindung hat einen Vorteil über die vorhandene Technik des Diffusor-Rohres in CINK-Banki-Ausführung. Die CINK-Turbine hat ein Turbinabsperrorgan, das parallel mit der Läuferachse funktioniert, d. h. ein über die ganze Achsenweite des Läufers funktionierendes Absperrorgan, aber nur mit einer Verkleinerung des Umfangs der Läuferschaufeln. Aus diesem Grund wäre eine solche Aufteilung des Diffusor-CINK-Rohres in die "Grenzkammer" wirkungslos bzw. physikalisch sinnlos.

Die Erfindung hat einen Vorteil auch über die vorhandene Technik von Banki-OSSBERGER, in der ein Saugrohr mit einem unveränderten Durchmesser für den zweistufigen Umfang der Energieausnutzung des Wasserstroms bis zu einem Verhältnis 1:6 eingesetzt ist. Ein solches Saugrohr hat zwar eine ausreichende Ausgangsgeschwindigkeit des Wassers bis zum niedrigsten Strom, d. h. 1/6 des vollen Stroms, aber nutzt dabei nicht in ausreichendem Maß die Ausgangs-Geschwindigkeitskinetische Energie des Wassers, die zum Beispiel bei normaler Ausgangsgeschwindigkeit von 3 m/s 0,459 m der geodätischen Höhe verliert:

$$h = \frac{V^2}{2g} = \frac{3^2 m^2/s^2}{19,6 \, m/s^2} = 0,459 \, m \, .$$

Das ist ein relativ großer Verlust in Installationen von kleinen WKVs, die sich oft an geodätischen Höhen zwischen 3 m und 10 m befinden.

**Bankiturbine mit einem Absperrorgan nach Patent SI 22684 in einer Alternativausführung mit einem einseitigen Segment des Absperrorgans**

Die Erfindung des Absperrorgans der Turbine gemäß dem genannten Patent kann in Sonderfällen in der Banki-Turbine nur an ein einseitiges Segment des Absperrorgans so angepasst werden, dass sich das Absperrorgan über die ganze Achsenweite des Läufers bis zur gegenüberliegenden Wand des Turbinengehäuses verschiebt (Figur 3). Das einseitige Turbinen-Absperrorgan eignet sich nur zur Ausführung von kleineren Turbinen mit einem engeren Läufer (entlang der Läuferachse gesehen), dort, wo eine relativ große Riemenscheibe eingesetzt werden soll. Bei der Ausrührung einer solchen Turbine wird im Diffusor-Saugrohr die "Grenzkammer" nur mit einer Trennwand im einen entsprechenden Abstand von der Seitenwand des sich an der Gegenseite des Ausgangs des Turbinenabsperrorgans befindenden Diffusors, definiert (Figur 3).

Der erfindungsgemäße Mechanismus wird im Weiteren in Verbindung mit den Zeichnungen genauer dargestellt. Die Zeichnungen zeigen:

Figur 1    Schematische Darstellung der Banki-Turbine mit einem Absperrorgan nach Patent SI 22684 und einem Anschluss für das erfindungsgemäße Diffusor-Saugrohr.

Figur 2    Querschnitt der Turbine mit dem Anschluss für das Diffusor-Saugrohr und einem Mittel zum Regulieren der Unterdruck-Wassersäule unterhalb des Läufers.

Figur 3    Schematische Darstellung der Banki-Turbine mit dem Absperrorgan nach Patent SI 22684 in einer Alternativausführung mit einem einseitigen Segment des Absperrorgans und mit einem angepassten erfindungsgemäßen Diffusor-Saugrohr.

Die Turbine auf Figur 1 umfasst ein Gehäuse 1, einen Läufer 2, Absperrorgane 3 zum Regulieren des Wasserstroms in das Gebiet des Läufers 2, einen den Wasserstrom in den Läufer 2 definierenden Konfusor 3 und einen Diffusor 5, der den Wasserstrom aus der Turbine in das Unterwasser so ableitet, dass der Ableitungsrand des Diffusors 6 immer in das Ableitungswasser eingetaucht ist.

Das Wesen der Erfindung liegt darin, dass der Diffusor 5 in Längsrichtung, vorzugsweise in Vertikalrichtung des Wasserstroms in drei Kammern 7, 8, 9 mit einem Trennmittel 11 und 11a unterteilt ist. Das Trennmittel 11 und 11a ist im Sinne von Trennwänden angelegt, die den Querschnitt des Diffusors in eine Mittelkammer "Grenzkammer" 8 und damit auch in zwei seitlichen Kammern 7 und 9 trennt.

Die Trennwände 11 und 11a im Diffusor sind vorzugsweise aus einem Stahlblech in entsprechender Dicke angelegt hinsichtlich der ganzen Konstruktion des sich einzelnen Installationsfällen anpassenden Diffusors. Die Trennwände 11 und 11a müssen den Diffusor wasserfest in die Kammern 7, 8, 9 in Richtung des Wasserstroms unterteilen.

Die "Grenzkammer" 8 wird durch die Breite definiert, die ein wenig oberhalb der vertikal schmalsten Absperrbreite von Absperrorganen 3 liegt, mit dem energetisch noch nutzbaren Wasserstrom. Die geeignete Breite der Grenzkammer beträgt 1/6 bis 1/5 der Breite des Läufers 2 längs der Läuferachse gesehen.

Bei der Banki-Turbine mit einem Absperrorgan P. SI 22684 nach einer Alternativausführung mit einem einseitigen Segment des Absperrorgans, Figur 3, wird nur ein Trennwand 11b angelegt, die den Diffusor 5a in zwei Kammern 8a und 9a trennt. Die "Grenzkammer" 8a ist an der gegenüberliegenden Seite der Ausgangsseite des Absperrorgans 3a in einer Breite definiert, die ein wenig größer als die engste energetisch nutzbare Durchströmung des Läufers 2a ist. Praktisch passende Breite der Grenzkammer 8a liegt zwischen 1/6 und 1/5 der Breite des Läufers 2a, längs der Läuferachse gesehen.

Die Höhe der Wassersäule im Diffusor 5 bzw. 5a ändert sich mit der Änderung des Unterdrucks unter dem Läufer auch in Abhängigkeit von der Menge des Wasserstroms durch die Turbine. Um es zu vermeiden, dass die Wasserhöhe aus dem Diffusor 5 bzw. 5b den Läufer erreichen und damit die Rotation des Läufers 2 bzw. 2a bremsen würde, ist ein Niveaufühler 12, Figur 2, vorgesehen, der in irgendwelche Kammer 7, 8, 9 bzw. 8a 9a im Diffusor-Saugrohr 5 bzw. 5a eingebaut ist. Die vom Niveaufühler 12 abgegebene Angabe wird von der Steuervorrichtung mit einem Luftventil 13 für den Luftauslass in den Raum 10 am Läufer berücksichtigt, Figur 2. Derart wird die Unterdruck-Wassersäule im Diffusor 5 bzw. 5a reguliert, die bis zum gewissen minimalen Abstand unterhalb des Läufers 2 bzw. 2a greifen muss.

Eine weniger genaue Regulierung der Wassersäule im Diffusor 5 bzw. 5a kann auch mit einem Springventil 14 für den Auslass in den Raum 10 am Läufer erfolgen, Figur 2.

## Patentansprüche

1. Mechanismus zur Regulierung des Wasserstroms durch eine Banki Wasserturbine umfassend ein Gehäuse (1), einen Läufer (2, 2a), ein Absperrorgan (3, 3a), einen Konfusor (4) der mit dem Absperrorgan (3) den Wasserstrom in den Läufen (2) richtet und einen Diffusor (5, 5a), der den Wasserstrom aus der Turbine in das Unterableitungswasser des Fliessgewässers ableitet, wobei der untere Rand des Diffusors (6) immer in Wasser eingetaucht ist, wobei im Diffusor (5) in Längsrichtung, vorzugsweise in Vertikalrichtung des Wasserstroms zwei bzw. drei Kammern (7, 8, 9) mittels Trennmittel (11,11a) ausgeführt sind, **dadurch gekennzeichnet, dass** die Breite einer der zwei Kammern (8a) bzw. der Mittelkammer (8) im Diffusor (5) längs der Rotorachse (2, 2a) gesehen 1/6 bis 1/5 der Breite des Läufers (2, 2a) beträgt.

2. Mechanismus nach Anspruch 1, **dadurch gekennzeichnet, dass** die Trennmittel (11, 11a, 11b) als Trennwände, vorzugsweise aus Stahlblech ausgebildet sind, wobei die Mittel (11, 11a, 11b) wasserdicht die Kammern (8, 8a) im Diffusor (5, 5a) definieren.

## Claims

1. Mechanism for regulating a water flow through a Banki water turbine comprising a housing (1), a rotor (2. 2a), a shut-off element (3, 3a), a confusor (4) which directs the water flow to the rotors (2) with the shut-off element (3), and a diffuser (5, 5a) which deflects the water flow from the turbine into the sub-drain water of the flow body, wherein the lower edge of the diffuser is constantly immersed in water, wherein two or three chambers (7, 8, 9) are arranged in the diffuser (5) in the longitudinal direction, preferably in the vertical direction of the water flow, by means of separating means (11,11a), **characterized in that** the width of one of the two chambers (8a) or of the central chamber (8) in the diffuser (5), viewed along the rotor axis (2, 2a), is 1/6 to 1/5 of the width of the rotor (2, 2a).

2. Mechanism according to claim 1, **characterized in that** the separating means (11, 11a, 11b) are formed as partition walls, preferably made of sheet steel, wherein the means (11, 11a, 11b) define the chambers (8, 8a) in the diffuser (5, 5a) in a watertight manner.

## Revendications

1. Mécanisme de régulation de l'écoulement d'eau à travers une turbine à eau Banki comprenant un boîtier (1), un rotor (2, 2a), un élément d'arrêt (3, 3a), un confuseur (4) qui dirige le flux d'eau vers les rotors (2) avec l'élément d'arrêt (3), et un diffuseur (5, 5a) qui dévie le flux d'eau de la turbine dans l'eau de sous-drain du corps d'écoulement, le bord inférieur du diffuseur étant constamment immergé dans l'eau, deux ou trois chambres (7, 8, 9) étant disposées dans le diffuseur (5) dans le sens longitudinal, de préférence dans la direction verticale du flux d'eau, au moyen de dispositifs de séparation (11, 11a), **caractérisé en ce que** la largeur de l'une des deux chambres (8a) ou de la chambre centrale (8) dans le diffuseur (5), vue le long de l'axe du rotor (2, 2a), est de 1/6 à 1/5 de la largeur du rotor (2, 2a).

2. Mécanisme selon la revendication 1, **caractérisé en ce que** les dispositifs de séparation (11, 11a, 11b) forment des parois de séparation, de préférence en tôle d'acier, les dispositifs (11, 11a, 11b) définissant les chambres (8, 8a) dans le diffuseur (5, 5a) de manière étanche à l'eau.

Figur 1

Figur 2

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- SI 22684
- JP H01257770 A
- JP H0212217795 B
- JP S57157768 B